(19) Europäisches Patentamt
European Patent Office
Office européen des brevets

(11) Veröffentlichungsnummer : **0 471 684 B1**

(12) **EUROPÄISCHE PATENTSCHRIFT**

(45) Veröffentlichungstag der Patentschrift :
**15.12.93 Patentblatt 93/50**

(51) Int. Cl.$^5$ : **G01D 5/24**

(21) Anmeldenummer : **90906167.3**

(22) Anmeldetag : **17.04.90**

(86) Internationale Anmeldenummer :
**PCT/EP90/00612**

(87) Internationale Veröffentlichungsnummer :
**WO 90/13793 15.11.90 Gazette 90/26**

(54) **SCHALTUNG UND VERFAHREN ZUM MESSEN EINER DIE KAPAZITÄTS-SPANNUNGS-CHARAKTERISTIK EINES KAPAZITIVEN ELEMENTES BEEINFLUSSENDEN GRÖSSE.**

(30) Priorität : **12.05.89 DE 3915563**

(43) Veröffentlichungstag der Anmeldung :
**26.02.92 Patentblatt 92/09**

(45) Bekanntmachung des Hinweises auf die
Patenterteilung :
**15.12.93 Patentblatt 93/50**

(84) Benannte Vertragsstaaten :
**CH DE FR GB LI NL**

(56) Entgegenhaltungen :
**GB-A- 2 078 970**
**Transactions of the Institute of Electronics, Information & Communication Engineers, vol. E70, no. 11, November 1987, Tokyo, JP, pages 1049-1050; T. Nagasawa et al: "An interface circuit for capacitive sensors"**
**NTIS Tech. Notes, August 1987, Springfield, VA, US, pages 729-730, B.D. Bryner et al: "Sliding capacitve displacement transducer"**
**Patent Abstracts of Japan, vol. 111, no. 10 (P-451), 25 April 1986, & JP-A-60 242354**
**Patent Abstracts of Japan, vol. 9, no. 5 (P-045), 21 January 1981, & JP-A-55 140142**

(73) Patentinhaber :
**FRAUNHOFER-GESELLSCHAFT ZUR FÖRDERUNG DER ANGEWANDTEN FORSCHUNG E.V.**
**Leonrodstrasse 54**
**D-80636 München (DE)**

(72) Erfinder : **SCHOENEBERG, Uwe**
**Brucknerstrasse 28**
**D-4100 Duisburg 1 (DE)**
Erfinder : **HOSTICKA, Bedrich**
**Zieglerstrasse 27**
**D-4100 Duisburg 1 (DE)**
Erfinder : **MACLAY, Jordan**
**316 N. 4th Avenue**
**Maywood, IL 60153 (US)**
Erfinder : **ZIMMER, Günther**
**Am Steinwerth 10**
**D-4100 Duisburg 29 (DE)**

(74) Vertreter : **Schoppe, Fritz, Dipl.-Ing. et al**
**Seitnerstrasse 42**
**D-82049 Pullach (DE)**

**Beschreibung**

Die vorliegende Erfindung betrifft ein Verfahren zum Messen der Konzentration eines Gases in einem Gasgemisch oder der Ionenkonzentration in einer Flüssigkeit mittels eines kapazitiven Halbleiter-Elementes mit einer von der Konzentration abhängigen Kapazitäts-Spannungs-Charakteristik nach dem Oberbegriff des Patentanspruchs 1 sowie eine Schaltungsan-Ordnung zum Messen der Konzentration eines Gases in einem Gasgemisch oder der Ionenkonzentration in einer Flüssigkeit mittels eines kapazitiven Halbleiter-Elementes mit einer von der Konzentration abhängigen Kapazitäts-Spannungs-Charakteristik mittels eines derartigen Verfahrens nach dem Oberbegriff des Patentanspruchs 4.

Kapazitive MOS-Strukturen haben einen spannungsabhängigen Kapazitätswert. Der Verlauf der Kapazitäts-Spannungs-Kurve wird beispielsweise im Falle kapazitiver MOS-Strukturen dann von weiteren Größen beeinflußt, wenn die metallische Schicht aus katalytischen Metallen besteht oder katalytische Metalle zumindest anteilig aufweist. Dieser Einfluß bestimmter Grössen auf den spannungsabhängigen Kapazitätsverlauf derartiger kapazitiver Strukturen wird ausgenutzt, um Sensoren zu bilden, mit denen die betreffende Größe erfaßt werden kann, die den spannungsabhängigen Kapazitätsverlauf beeinflußt.

Bekannte Einsatzbereiche derartiger kapazitiver Elemente sind beispielsweise auf bestimmte Gase ansprechende Gassensoren wie z.B. Wasserstoffsensoren. Eine Ausführungsform des letztgenannten Wasserstoffsensors, dessen spannungsabhängige Kapazitätskurve in Abhängigkeit von der Umgebungsfeuchtigkeit variiert, ist offenbart in der wissenschaftlichen Veröffentlichung G. J. Maclay, "MOS hydrogen sensors with ultrathin layers of palladium", IEEE Trans. Electron Devices, Band ED-32, Seiten 1158 bis 1164, 1985.

Gegenwärtig werden zwei verschiedene Techniken zum Erfassen der Änderung der Kapazitäts-Spannungs-Charakteristik und somit zum Bestimmen der die Kapazitäts-Spannungs-Charakteristik beeinflussenden Größe eingesetzt:

- Bei einer ersten Technik, die bekannt ist aus "Sensors and Actuators, 1, 1981, Seiten 403 bis 426", wird an das kapazitive MOS-Element eine konstante Vorspannung angelegt, der ein hochfrequentes Spannungssignal von vorbestimmter Amplitude überlagert ist. Bei einer durch die zu messende Größe bewirkten Verschiebung der Kapazitäts-Spannungs-Charakteristik ändert sich die Kapazität in dem durch die Vorspannung festgelegten Arbeitspunkt. Diese Kapazitätsänderung kann in einer Meßbrücke erfaßt werden.

- Bei einer zweiten Technik wird das kapazitive MOS-Element in einer rückgekoppelten Regelschaltung mit einer derartigen Vorspannung beaufschlagt, daß dieses einen konstanten Kapazitätswert hat. Die nachgeregelte Vorspannung bzw. die Verschiebung des Spannungsarbeitspunktes kann zum Bestimmen der die Kapazitäts-Spannungs-Charakteristik beeinflussenden Größe herangezogen werden.

Bei beiden beschriebenen Techniken benötigt man eine vergleichsweise aufwendige Schaltung zum Erfassen der die Kapazitäts-Spannungs-Charakteristik beeinflussenden Größe. Bei beiden Techniken können innerhalb der kapazitiven MOS-Struktur Ionenwanderungen im Inneren der Struktur und an deren Oberfläche auftreten, wodurch die Langzeitstabilität bei der Erfassung der die Kapazitäts-Spannungs-Charakteristik beeinflussenden Größe beeinträchtigt wird. Beiden Techniken liegt die Erfassung einer vergleichsweise kleinen Signaländerung im Arbeitspunkt zugrunde. Daher ermangelt es beiden Techniken an einem hinreichenden Signal/Rausch-Verhältnis bei der ermittelten Größe, also der Feuchtigkeit oder der Gaskonzentration.

Weitere Verfälschungen der Meßergebnisse, die mit diesen bekannten Techniken erzielbar sind, ergeben sich daraus, daß die Kapazitäts-Spannungs-Charakteristik des kapazitiven MOS-Elementes üblicherweise nicht nur von einer zu messenden Größe abhängt, sondern ebenfalls zu einem gewissen Ausmaß von weiteren Störgrößen beeinflußt wird.

Die GB-A-2078970 offenbart einen kapazitiven Sensor zum Erfassen der Lage eines Magnetbandes innerhalb einer Vakuumkammer mit einer nachgeordneten Auswerteschaltung, die ein kapazitätsabhängiges Spannungsausgangssignal liefern soll, das die Lage des Magnetbandes anzeigen soll. Bei dem kapazitiven Sensor handelt es sich um einen Sensor mit einem spannungsunabhängigen Kapazitätswert. Die Auswerteschaltung umfaß einen Eingangsoszillator zum Erzeugen eines Rechteckspannungssignales, mit dem der kapazitive Sensor und eine Vergleichskapazität beaufschlagt werden. Eine Integrationsschaltung mit einem Operationsverstärker und einer in dem Rückkopplungszweig desselben angeordneten Integrationskondensator erzeugt eine Ausgangsspannung, die sich aus der Ladungsdifferenz zwischen der in dem Sensor gespeicherten Ladung und der in dem Bezugskondensator gespeicherten Ladung ergibt. Parallel zum Integrationskondensator liegt ein Schalter, der periodisch geschlossen wird, um bei jeder Periode des Rechteckspannungssignales einmal die aktuelle Kapazität des kapazitiven Sensors erfassen zu können. Das Spannungsausgangssignal wird durch ein Tiefpaßfilter geglättet. Kurz gesagt befaßt sich diese Schrift mit einem speziellen kapazitiven Lagesensor sowie einer Kapazitätsmeßschaltung für die Bestimmung des spannungsunabhängigen Kapazitätswertes des kapazitiven Lagesensors.

Aus der Fachveröffentlichung Transactions of the Institute of Electronics Information, Band E 70, Nr. 11, 1987, Seiten 1049, 1050 ist eine Schnittstellenschaltung für kapazitive Sensoren bekannt, welche mit eingangsseitigen Wechselspannungsquellen arbeitet, die Bezugskapazitäten und eine Meßkapazität mit einem festen Spannungssignal beaufschlagen, wobei der ausgangsseitige Strom in einem Integrationskondensator innerhalb eines Rückkopplungszweiges eines Integrationsverstärkers zu einem Ausgangssignal aufintegriert wird. Das aufintegrierte Ausgangssignal wird periodisch abgetastet. Diese bekannte Schnittstellenschaltung dient lediglich zum Erfassen von sehr kleinen zeitlichen Kapazitätsänderungen von kapazitiven Elementen, deren Kapazitätswert jedoch spannungsunabhängig ist.

Die Fachveröffentlichung NTIS TECH NOTES, 08 1987, Springfield, VA USA, Seiten 729, 730 befaßt sich mit der Bestimmung des Kapazitätswertes eines kapazitiven Verschiebungssensors mittels eines Integrationsverstärkers, wobei der kapazitive Verschiebungssensor eingangsseitig von einem Oszillator mit einer vorbestimmten Spannungsamplitude beaufschlagt wird und wobei der Integrationsverstärker in seinem Rückkopplungszweig einen Integrationskondensator aufweist. Die Änderungen der Amplitude der Ausgangsspannung des Integrationsverstärkers sind proportional zum Kapazitätswert des kapazitiven Sensors. Kurz gesagt erzeugt diese bekannte Anordnung ein Ausgangssignal mit einer Wechselamplitude, die proportional zum Kapazitätswert eines spannungsunabhängigen kapazitiven Elementes ist.

Gegenüber diesem Stand der Technik liegt der vorliegenden Erfindung die Aufgabe zugrunde, ein Verfahren sowie eine Schaltungsanordnung der eingangs genannten Art so weiter zu bilden, daß die Konzentrationsmessung mit einer bezogen auf den eingangs genannten Stand der Technik verbesserten Langzeitstabilität bei verbessertem Signal/Rausch-Verhältnis durchgeführt werden kann.

Diese Aufgabe wird bei einem Verfahren nach dem Oberbegriff des Anspruchs 1 durch die im kennzeichnenden Teil dieses Anspruchs angegebenen Verfahrensschritte und bei einer Schaltungsanordnung nach dem Oberbegriff des Anspruchs 3 durch die im kennzeichnenden Teil dieses Anspruchs angegebenen Merkmale gelöst.

Der Erfindung liegt die Erkenntnis zugrunde, daß die mangelnde Genauigkeit der eingangs erörterten Verfahren zum Bestimmen der die Verschiebung der Kapazitäts-Spannungs-Charakteristik des kapazitiven Elementes beeinflussenden Größe und insbesondere das unzureichende Signal-Störspannungs-Verhältnis bei der Bestimmung der beeinflussenden Größe nach den bekannten Technologien dann vermieden wird, wenn als Grundlage für die Erfassung der beeinflussenden Größe die Fläche unter der Kurve der Spannungs-Kapazitäts-Charakteristik in einem vorbestimmten Bereich herangezogen wird. Eine derartige Messung kann schaltungstechnisch dadurch einfach implementiert werden, daß das kapazitive Element mit einem periodischen Spannungssignal von vorbestimmter Amplitude beaufschlagt wird, wobei eine Integrationsschaltung den Ausgangsstrom des kapazitiven Elementes über eine bestimmte Zeitdauer aufintegriert. Der sich ergebende Integrationswert hat eine vorbestimmbare Abhängigkeit von der beeinflussenden Größe, so daß es beispielsweise möglich ist, mit dem Integrationswert eine Tabelle auszulesen, deren Ausgangswert die beeinflussende Größe ist. Die sich ergebende, erfindungsgemäße Meßschaltung zur Durchführung dieses Meßverfahrens besteht im wesentlichen aus einer Spannungsquelle und einer Integrationsschaltung mit einem über einen elektronischen Schalter entladbaren kapazitiven Element im Rückkopplungszweig, so daß die Schaltung eine sehr einfache Struktur hat. Bei der erfindungsgemäßen Art der Erfassung der beeinflussenden Größe erfolgt die dynamische Messung mit einer Wechselspannungskomponente, die sich um einen Arbeitspunkt herum bewegt. Hierdurch können Ionenwanderungen in dem kapazitiven Element sowie an der Oberfläche desselben unterdrückt werden, wodurch eine Langzeitstabilität des Meßergebnisses erzielt wird. In Abweichung von den eingangs beschriebenen Verfahren erfolgt die Bestimmung der beeinflussenden Größe anhand des Integrales über die verschobene Kapazitäts-Span- nungs-Kurve und nicht nur anhand der Erfassung der Änderung der Kurve an einem einzigen Spannungs- oder Kapazitäts-Punkt. Hieraus ergibt sich ein gegenüber dem Stand der Technik erheblich verbessertes Signal-Störspannungs-Verhältnis der ermittelten, die Verschiebung der Kapazitäts-Spannungs-Charakteristik verursachenden Größe.

Bevorzugte Weiterbildungen der vorliegenden Erfindung sind Gegenstand der Unteransprüche.

Nachfolgend wird unter Bezugnahme auf die beiliegenden Zeichnungen eine bevorzugte Ausführungsform der erfindungsgemäßen Schaltung näher erläutert. Es zeigen:

| | |
|---|---|
| Fig. 1 | eine graphische Darstellung der Kapazitäts-Spannungs-Charakteristik eines kapazitiven Elementes bei zwei verschiedenen beeinflussenden Größen; |
| Fig. 2 | ein Schaltbild der erfindungsgemäßen Schaltung zum Messen der die Kapazitäts-Spannungs-Charakteristik beeinflussenden Größe; |
| Fig. 3 | Signalverläufe von Spannungssignalen, wie sie in der Schaltung gemäß Fig. 2 auftreten; |
| Fig. 4 | die Abhängigkeit der Integrationsspannung bei der Schaltung gemäß Fig. 2 von einer beeinflussenden Größe; |
| Fig. 5 | typische Kapazitätsverläufe für kapazitive MOS-Strukturen in Abhängigkeit von der Vorspan- |

nung; und

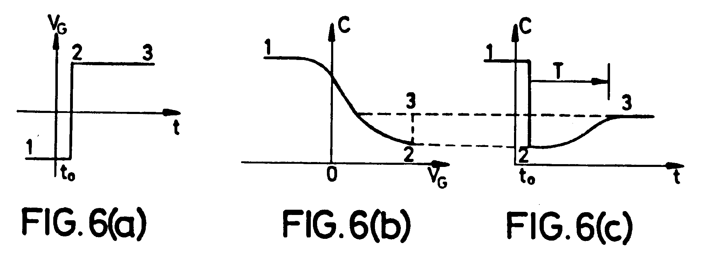

Fig. 6 (a-c)        Spannungs- und Kapazitätsverläufe.

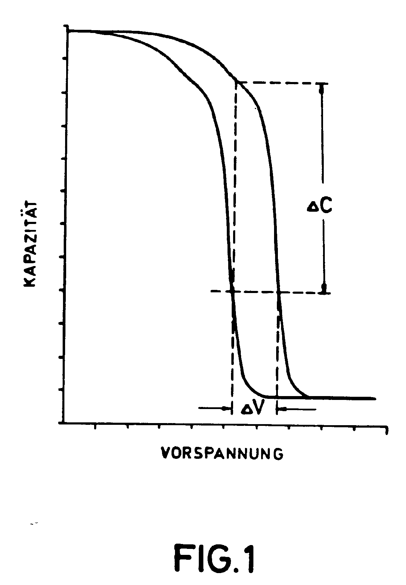

Wie in Fig. 1 zu sehen ist, verschiebt sich der spannungsabhängige Kapazitätsverlauf einer kapazitiven MOS-Struktur, deren Metallschicht ein katalytisches Metall enthält, in Abhängigkeit von einer beeinflussenden Größe, die beispielsweise die $H_2$-Konzentration oder die Konzentration eines bestimmten Gases in der Umgebungsatmosphäre sein kann. Diese Verschiebung der Kapazitäts-Spannungs-Charakteristik wurde, wie eingangs erläutert, im Stand der Technik bei konstanter Vorspannung durch Messen der Kapazitätsänderung $\Delta C$ oder bei Konstanthalten des Kapazitätswertes durch Messen der Vorspannungsänderung $\Delta V$ erfaßt. Hingegen sieht die Erfindung vor, wie sich aus der nachfolgenden detaillierten Erläuterung der Schaltung und des Verfahrens ergeben wird, die beeinflussende Größe aus der Fläche unterhalb der Spanungs-Kapazitäts-Kurve innerhalb eines vorbestimmten Bereiches abzuleiten.

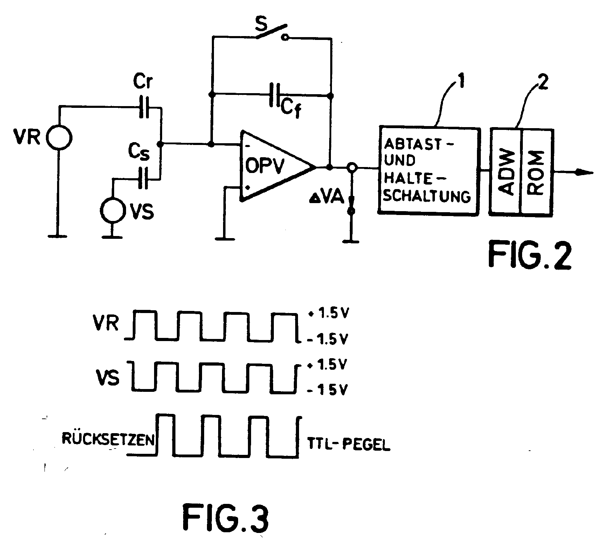

Fig. 2 zeigt eine bevorzugte Ausführungsform der erfindungsgemäßen Schaltung zum Messen einer die Kapazitäts-Spannungs-Charakteristik eines kapazitiven Elementes $C_s$ beeinflussenden Größe, wie z.B. einer Gaskonzentration, die eine Wasserstoffkonzentration sein kann, oder einer Ionenkonzentration in einer Flüssigkeit. Das kapazitive Element $C_s$ bei der bevorzugten Ausführungsform ist ein kapazitives MOS-Element, dessen Metallschicht aus Palladium besteht, das auch als MOS-Palladium-Gate-Sensor bezeichnet wird. Das kapazitive Element $C_s$ wird von einer ersten Spannungsquelle VS mit einer Rechteckspannung versorgt, deren Amplitude bei einem bevorzugten Ausführungsbeispiel +/- 1,5 V bei einem Tastverhältnis von 50 % entspricht. Ausgangsseitig ist das kapazitive Element $C_s$ an den invertierenden Eingang eines Operationsverstärkers OPV angeschlossen. Eine zweite Spannungsquelle VR erzeugt ein zweites Rechtecksignal, das dem ersten Rechtecksignal entspricht, jedoch gegenüber diesem invertiert ist. Mit diesem zweiten Rechteckspannungssignal wird ein Referenzkondensator $C_r$ beaufschlagt, dessen Ausgang gleichfalls mit dem invertierenden Eingang des Operationsverstärkers OPV verbunden ist. Die Kapazität des Referenzkondensators $C_r$ ist derart gewählt, daß eine am Ausgang des Operationsverstärkers erscheinende Offsetspannung bei von der zu messenden Größe unbeeinflußten Kapazitäts-Spannungs-Charakteristik des kapazitiven Elementes $C_s$ kompensiert wird.

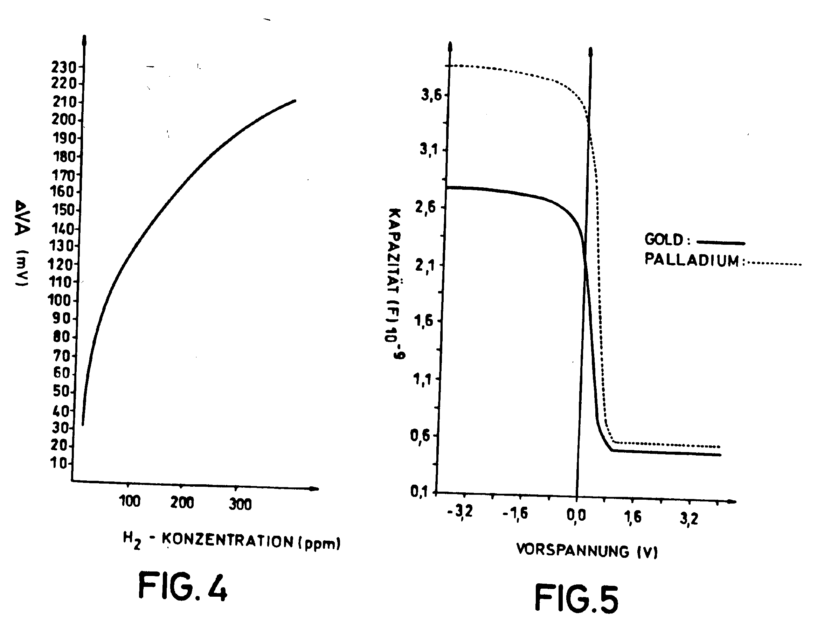

Im Rückkopplungszweig des Operationsverstärkers OPV, d. h. zwischen dessen Ausgang und seinem invertierenden Eingang, liegt ein Integrationskondensator $C_f$, zu dem ein elektronischer Schalter S parallel geschaltet ist. Der elektronische Schalter S wird in einer bestimmten, festgelegten Phasenabhängigkeit zur Phase des ersten Rechtecksignales mittels eines Rücksetzsignales (vgl. Fig. 3) betätigt, wodurch die Integration beendet wird und ein Spannungswert am Ausgang $\Delta VA$ rückgesetzt wird. Der Ausgangswert des Operationsverstärkers OPV $\Delta VA$ vor dem Rücksetzen wird in einer Abtast-und Halteschaltung 1 übernommen. Aus diesem Ausgangswert kann die beeinflussende Größe abgeleitet werden, die im Beispielsfall die $H_2$-Konzentration ist. Zweckmäßigerweise erfolgt die Zuordnung der $H_2$-Konzentration zur Ausgangsspannung $\Delta VA$ über eine Tabelle, die durch einen D/A-Wandler und ein ROM 2 implementiert sein kann, in dem die in Fig. 4 dargestellte Abhängigkeit der genannten Größen abgespeichert ist. Die in Fig. 4 wiedergegebene Kurve ist das Ergebnis einer Messung mit einem Palladiumsensor, dessen katalytische Metallschicht eine 21,1 nm dicke Palladiumschicht ist, die auf einer 34 nm dicken Siliziumdioxidschicht angeordnet ist.

Als Referenzkondensator wurde eine kapazitive MOS-Struktur mit einem 104,5 nm dicken Gold-Gate auf einer 34 nm dicken Siliziumdioxid-Isolatorschicht gewählt. Die Kapazität des Integrationskondensators $C_f$ beträgt 1 nF.

Wie eingangs dargelegt wurde, erfolgt bei der erfindungsgemäßen Schaltung die Erfassung der beeinflussenden Größe durch Integration der Kapazitäts-Spannungs-Kurve des kapazitiven Elementes zur Bestimmung der Fläche unter dieser Kurve, was durch folgende Gleichung ausdrückbar ist:

$$(1) \qquad Q = \int C_s(U)\, dU$$

Der Strom durch das kapazitive Sensorelement $C_s$ ist gegeben durch:

$$(2) \qquad i_s = dQ/dt = d/dt \int C_s(U)\, dU$$

Durch zeitliche Integration am Rückkopplungskondensator $C_f$ ergibt sich folgende Ausgangsspannung:

$$(3) \qquad VA = 1/C_f \int i_s\, dt = 1/C_f \int (C_s(U) - C_r)\, dU$$

Der Kapazitätswert $C_f$ muß so gewählt werden, daß der Opera- tionsverstärker OPV bei maximaler Meßgröße nicht übersteuert wird.

Fig. 5 zeigt die beiden spannungsabhängigen Kapazitätskurven des Referenzelementes $C_r$ und des Sensorelementes $C_s$. Wie in dieser Fig. zu sehen ist, führt die nichtoptimale Anpassung der beiden Kurven zu einer Offsetspannung von etwa 2 V. Für die Kurve gemäß Fig. 4 wurde diese Offsetspannung berücksichtigt.

Wie sich bei Betrachtung der Schaltung gemäß Fig. 2 ergibt, ermöglicht das erfindungsgemäße Verfahren zum Messen der die Kapazitäts-Spannungs-Charakteristik beeinflussenden Größe eine Kompensation von Störgrößen, die sowohl das eigentliche Sensorelement bzw. kapazitive Element $C_s$ wie auch den Referenzkondensator $C_r$ in gleicher Weise in ihrer Kapazitäts-Spannungs-Charakteristik beeinflussen. Wenn nun beispielsweise das kapazitive (Sensor)-Element $C_s$ sowohl eine Abhängigkeit der Kapazitäts-Spannungs-Charakteristik von einer Größe A wie auch von einer Störgröße B hat, so kann diese unerwünschte Empfindlichkeit gegenüber der Störgröße B dadurch kompensiert werden, daß als Referenzkondensator ein kapazitives MOS-Element eingesetzt wird, das nur gegenüber der Störgröße B empfindlich ist. Bei geeigneter Dimensionierung der beiden kapazitiven Elemente ist eine vollständige Kompensation gegenüber der Störgröße B möglich. Durch eine Vielzahl von Referenzelementen kann eine entsprechende Zahl von unerwünschten Querempfindlichkeiten kompensiert werden.

Vorzugsweise liegt die Frequenz der Rechtecksignale im kHz-Bereich. Somit ist die Periodendauer der Rechteckspannungs-Signale länger als die Minoritätsträgerreaktionszeit, so daß es zu einem Gleichgewichtszustand der Minoritätsträgeranhäufung kommt, während die Periodendauer der Rechteckspannungs-Signale kürzer als die Minoritätsträgergeneration-Rekombinations-Zeit ist, so daß die MOS-Struktur nicht in den Gleichgewichts-Inversionsbereich gerät. Dies führt zu einer Verstärkung des Signales, da die spannungsabhängige Kapazitätskurve nach unten in den Bereich tiefer Ladungsträgerverarmung verläuft.

Bei der Festlegung der Periodendauer muß das Verhalten des MOS-Kondensators im Bereich tiefer Ladungsträgerverarmung beachtet werden. Nach Anlegen einer Sprungspannung verbleibt der MOS-Kondensator nur eine bestimmte Zeit T im Bereich tiefer Ladungsträgerverarmung und geht dann in die HF-Inversionskurve über.

$$T = 2 \tau N_B/n_i,$$

wobei $\tau$ die Minoritätsträgerlebensdauer, $N_B$ die Dotierung und $n_i$ die intrinsische Konzentration für den betreffenden MOS-Kondensator bezeichnen.

Die Taktrate kann nun entweder so hoch gewählt werden, daß noch keine die Genauigkeit beeinflussende Bewegung in Richtung zur Hf-Inversionskurve stattfindet, oder so gewählt werden, daß die HF-Inversionskurve sicher erreicht wird. Zur Verdeutlichung wird auf Fig.6 verwiesen, in der

(a) die zeitabhängige Gatespannung am MOS-Kondensator,

(b) die spannungsabhängige Kapazität desselben zu den Zeitpunkten 1,2,3 gemäß Fig. 6(a) und

(c) den zeitabhängigen Kapazitätsverlauf zeigen.

Bei dem beschriebenen Ausführungsbeispiel wird eine kapazitive MOS-Struktur mit Palladium-Gate als Feuchtigkeitssensor eingesetzt. Jedoch kann das erfindungsgemäße Verfahren ebenso für Gassensoren mit MOS-Struktur zur Auswertung der Gaskonzentration wie auch zum Messen sonstiger, die Kapaziäts-Spannungs-Charakteristik eines kapazitiven Elementes beeinflussender Größen eingesetzt werden.

**Patentansprüche**

1.  Verfahren zum Messen der Konzentration eines Gases in einem Gasgemisch oder der Ionenkonzentration in einer Flüssigkeit mittels eines kapazitiven Halbleiter-Elementes mit einer von der Konzentration abhängigen Kapazitäts-Spannungs-Charakteristik,
    gekennzeichnet durch folgende Schritte:
    - Beaufschlagen des kapazitiven Halbleiter-Elementes ($C_s$) mit einem periodischen Spannungssignal von vorbestimmter Amplitude,
    - Erfassen der Fläche unter dem Kurvenverlauf der Kapazitäts-Spannungs-Charakteristik durch Integration des Stromes des kapazitiven Halbleiterelementes über einen Teil der Periode des Spannungssignales in einem vorbestimmten Bereich, und
    - Bestimmen der zu messenden Konzentration aus der erfaßten Fläche mittels eines für das Halbleiter-Element ($C_s$) vorab bestimmten Zusammenhanges zwischen der zu messenden Konzentration und der Fläche.

2.  Verfahren nach Anspruch 1, dadurch gekennzeichnet,
    daß die Fläche durch Integration des Ausgangsstromes des kapazitiven Halbleiter-Elementes ($C_s$) über einen Teil der Periode des Spannungssignals ermittelt wird.

3.  Verfahren nach Anspruch 1 oder 2, dadurch gekennzeichnet,
    daß die Periodendauer des Spannungssignales länger als die Minoritätsträgerreaktionszeit in dem kapazitiven Halbleiter-Element ($C_s$) ist, so daß es zu einem Gleichgewichtszustand der Minoritätsträgeranhäufung kommt, und kürzer als die Minoritätsträger-Generations-Rekombinations-Zeit ist.

4.  Schaltungsanordnung zum Messen der Konzentration eines Gases in einem Gasgemisch oder der Ionenkonzentration in einer Flüssigkeit mit einem kapazitiven HalbleiterElement, das eine von der Konzentration abhängige Kapazitäts-Spannungs-Charakteristik aufweist, mittels eines Verfahrens nach einem der Ansprüche 1 bis 3,
gekennzeichnet durch

- eine an den einen Pol des kapazitiven Halbleiter-Elementes ($C_s$) angeschlossene erste Spannungsquelle ($V_s$) zum Erzeugen eines ersten periodischen Spannungssignals von vorbestimmter Amplitude, und
- eine an den anderen Pol des kapazitiven Halbleiter-Elementes ($C_s$) angeschlossene Integrationsschaltung (OPV, $C_f$), die den Ausgangsstrom des kapazitiven Halbleiter-Elementes ($C_s$) über einen Teil der Periode des ersten Spannungssignals integriert, wobei die zu messende Konzentration mittels eines für das Halbleiter-Element ($C_s$) vorab bestimmten Zusammenhanges zwischen dem Integrationswert der Inte- grationsschaltung (OPV, $C_f$) und der Konzentration ermittelt wird.

5. Schaltungsanordnung nach Anspruch 4, dadurch gekennzeichnet,
daß das kapazitive Halbleiter-Element ($C_s$) eine MOS-Struktur ist, deren Metallschicht aus einem katalytischen Metall besteht oder dieses zumindest anteilig aufweist.

6. Schaltungsanordnung nach Anspruch 5, dadurch gekennzeichnet,
daß das kapazitive Halbleiter-Element ($C_s$) ein kapazitiver MOS-Gassensor oder ein kapazitiver MOS-Feuchtigkeitssensor oder ein kapazitiver MOS-Sensor zum Messen von Ionenkonzentrationen in Flüssigkeiten ist.

7. Schaltungsanordnung nach einem der Ansprüche 4 bis 6, dadurch gekennzeichnet,
daß die erste Spannungsquelle ($V_s$) ein periodisches Rechtecksignal erzeugt.

8. Schaltungsanordnung nach einem der Ansprüche 4 bis 7, dadurch gekennzeichnet,
daß die Integrationsschaltung (OPV, $C_f$) einen Operationsverstärker (OPV) aufweist, in dessen Rückkopplungszweig eine Parallelschaltung aus einem Integrationskondensator ($C_f$) und einem elektronischen Schalter (S) liegt,
daß der elektronische Schalter (S) in einer festen Phasenbeziehung zur Phase des periodischen Signals von der ersten Spannungsquelle ($V_s$) angesteuert wird, und
daß der der ersten Spannungsquelle ($V_s$) abgewandte Anschluß des kapazitiven Halbleiter-Elementes ($C_s$) mit einem Eingang (-) des Operationsverstärkers (OPV) verbunden ist.

9. Schaltungsanordnung nach einem der Ansprüche 4 bis 8, gekennzeichnet durch
eine zweite Spannungsquelle (VR) zum Erzeugen eines gegenüber dem ersten Spannungssignal invertierten zweiten Spannungssignals, und
einen Referenz-Kondensator ($C_r$), dessen Kapazität so gewählt ist, daß eine Offsetspannung am Ausgang der Integrationsschaltung (OPV, $C_f$) bei von der zu messenden Konzentration unbeeinflußter Kapazitäts-Spannungs-Charakteristik des kapazitiven Halbleiter-Elementes ($C_s$) kompensiert wird, und der einerseits an die zweite Spannungsquelle (VR) und andererseits an die Integrationsschaltung (OPV, $C_f$) angeschlossen ist.

10. Schaltungsanordnung nach einem der Ansprüche 4 bis 9, gekennzeichnet durch
ein kapazitives Referenzelement ($C_r$), dessen Kapazitäts-Spannungs-Charakteristik von einer Störgröße im wesentlichen in demselben Maß beeinfluß wird, wie diejenige des kapazitiven Elementes ($C_s$), ohne daß die Kapazitäts-Spannungs-Charakteristik des kapazitiven Referenzelementes ($C_r$) von der zu messenden Konzentration abhängt, und
die zweite Spannungsquelle (VR) zum Erzeugen eines gegenüber dem ersten Spannungssignal invertierten zweiten Spannungssignals, die an einen Anschluß des Referenzelementes ($C_r$) angeschlossen ist, dessen anderer Anschluß mit der Integrationsschaltung (OPV, $C_f$) verbunden ist.

## Claims

1. A method of measuring the concentration of a gas in a mixture of gases or the ion concentration in a fluid by means of a capacitive semiconductor element having a capacitance-voltage characteristic depending on the concentration,
characterized by the following steps:
- applying to the capacitive semiconductor element ($C_s$) a periodic voltage signal of predetermined amplitude,

EP 0 471 684 B1

- detecting the area under the curve of the capacitance-voltage characteristic by integrating the current of the capacitive semiconductor element over a part of the period of the voltage signal within a predetermined region, and
- determining the concentration to be measured on the basis of the detected area by means of a relationship between the concentration to be measured and said area, said relationship being predetermined for the capacitive semiconductor element ($C_s$).

2. A method according to claim 1, characterized in that
the area is detected by integration of the output current of the capacitive semiconductor element ($C_s$) at least over part of the period of the voltage signal.

3. A method according to claim 1 or 2, characterized in that
the period duration of the first periodic signal is determined such that it is longer than the minority carrier reaction time in the capacitive semiconductor element ($C_s$) so that an equilibrium state of the minority carrier accumulation will occur, and such that it is shorter than the minority carrier generation recombination time.

4. A circuit for measuring the concentration of a gas in a mixture of gases or the ion concentration in a fluid by means of a capacitive semiconductor element having a capacitance-voltage characteristic depending on the concentration, by means of a method acording to one of the claims 1 to 3,
characterized by
- a first voltage source ($V_s$) connected to the capacitive semiconductor element ($C_s$) and used for producing a first periodic voltage signal of predetermined amplitude, and
- an integrating circuit (OPV, $C_f$), which is connected to the capacitive semiconductor element ($C_s$) and which integrates the output current of said capacitive semiconductor element ($C_s$) over a part of the period of the first periodic voltage signal, the concentration to be measured being derived by means of a predetermined relationship between the integrated value of the integrating circuit (OPV, $C_f$) and the concentration.

5. A circuit according to claim 4, characterized in that
the capacitive semiconductor element ($C_s$) is an MOS structure whose metal layer consists of a catalytic metal or contains at least a certain percentage of said catalytic metal.

6. A circuit according to claim 5, characterized in that
the capacitive semiconductor element ($C_s$) is a capacitive MOS gas sensor or a capacitive MOS humidity sensor or a capacitive MOS sensor for measuring ion concentrations in liquids.

7. A circuit according to one of the claims 4 to 6, characterized in that
the first voltage source ($V_s$) produces a periodic squarewave signal.

8. A circuit according to one of the claim 4 to 7, characterized in that
the integrating circuit (OPV, $C_f$) comprises an operational amplifier (OPV), a parallel connection consisting of an intergration capacitor ($C_f$) and of an electronic switch (S) being disposed in the feedback branch of said operational amplifier (OPV),
that the electronic switch (S) is controlled in a fixed phase relationship to the phase of the periodic signal by the first voltage source (VS), and
that the terminal of the capacitive semiconductor element ($C_s$) which faces away from said first voltage source (VS) is connected to an input (-) of the operational amplifier (OPV).

9. A circuit according to one of the claims 4 to 8, characterized by
a second voltage source (VR) for producing a second voltage signal which is inverted relative to said first voltage signal,
a reference capacitor ($C_f$) whose capacitance is chosen such that an offset voltage at the output of the integrating circuit (OPV, $C_r$) is compensated when the capacitance-voltage characteristic of the capacitive semiconductor element ($C_s$) is uninfluenced by the quantity to be measured, said reference capacitor ($C_r$) being connected to the second voltage source (VR) on the one hand and to the integrating circuit (OPV, $C_r$) on the other.

10. A circuit according to one of the claims 4 to 9, characterized by

7

a capacitive reference element (C$_r$) whose capacitance-voltage-characteristic is influenced by an interference quantity to essentially the same extent as that of the capacitive element (C$_s$), the capacitance-voltage characteristic of said capacitive reference element (C$_r$) depending, however, not on the quantity to be measured, and

a second voltage source (VR), which is used for producing a second voltage signal inverted relative to said first voltage signal and which is connected to a terminal of the reference element (C$_r$) whose other terminal is connected to the integrating circuit (OPV, C$_f$).

## Revendications

1. Procédé de mesure de la concentration d'un gaz dans un mélange de gaz ou de la concentration ionique dans un liquide à l'aide d'un élément semi-conducteur capacitif à caractéristique de tension-capacité fonction de la concentration, caractérisé par les étapes suivantes:
   - alimentation de l'élément semi-conducteur capacitif (C$_s$) en un signal de tension périodique d'amplitude prédéterminée,
   - détermination de la surface sous l'évolution de la courbe de la caractéristique de tension-capacité par intégration du courant de l'élément semi-conducteur capacitif sur une partie de la période du signal de tension dans une zone prédéterminée, et
   - détermination de la concentration à mesurer à partir de la surface déterminée à l'aide d'un rapport, préalablement déterminé, entre la concentration à mesurer et la surface, pour l'élément semi-conducteur capacitif (C$_s$).

2. Procédé suivant la revendication 1, caractérisé en ce que la surface est déterminée par intégration du courant de sortie de l'élément semi-conducteur capacitif (C$_s$) sur une partie de la période du signal de tension.

3. Procédé suivant la revendication 1 ou 2, caractérisé en ce que la durée de la période du signal de tension rectangulaire est plus longue que le temps de réaction des supports minoritaires dans l'élément semi-conducteur capacitif (C$_s$), de manière qu'il se produit une situation d'équilibre de l'accumulation de supports minoritaires, et plus courte que le temps de recombinaison de génération de supports minoritaires.

4. Circuit pour mesurer la concentration d'un gaz dans un mélange de gaz ou de la concentration ionique dans un liquide à l'aide d'un élément semi-conducteur capacitif qui présente une caractéristique de tension-capacité fonction de la concentration, à l'aide d'un procédé suivant l'une des revendications 1 à 3. caractérisé par
   - une première source de tension (V$_s$), raccordée à un pôle de l'élément semi-conducteur capacitif (C$_s$), destinée à produire un premier signal de tension périodique d'amplitude prédéterminée, et
   - un circuit d'intégration (OPV, C$_f$), raccordé à l'autre pôle de l'élément semi-conducteur capacitif (C$_s$), qui intègre le courant de sortie de l'élément semi-conducteur capacitif (C$_s$) sur une partie de la période du premier signal de tension, la concentration à mesurer étant déterminée à l'aide d'un rapport, préalablement déterminé, entre la valeur d'intégration du circuit d'intégration (OPV, C$_f$) et la concentration, pour l'élément semi-conducteur capacitif (C$_s$).

5. Circuit suivant la revendication 4, caractérisé en ce que l'élément semi-conducteur capacitif (C$_s$) est une structure MOS dont la couche métallique consiste en un métal catalytique ou présente celui-ci du moins en partie.

6. Circuit suivant la revendication 5, caractérisé en ce que l'élément semi-conducteur capacitif (C$_s$) est un détecteur de gaz MOS capacitif ou un détecteur d'humidité MOS capacitif ou un détecteur MOS capacitif pour mesurer les concentrations ioniques dans des liquides.

7. Circuit suivant l'une des revendications 4 à 6, caractérisé en ce que la première source de tension (Vs) produit un signal rectangulaire périodique.

8. Circuit suivant l'une des revendications 4 à 7, caractérisé en ce
que le circuit d'intégration (OPV, C$_f$) présente un amplificateur opérationnel (OPV) dans le branchement de couplage de réaction duquel se trouve un circuit parallèle composé d'un condensateur d'intégration (Cf) et d'un interrupteur électronique (S),

que l'interrupteur électronique (S) est commandé par la première source de tension ($V_s$) suivant un rapport de phase fixe par rapport à la phase du signal périodique, et

que le raccordement de l'élément semi-conducteur capacitif ($C_s$) opposé à la première source de tension ($V_s$) est relié à une entrée (-) de l'amplificateur opérationnel (OPV).

9. Circuit suivant l'une des revendications 4 à 8, caractérisé par

une seconde source de tension (VR) destinée à produire un second signal de tension inversé par rapport au premier signal de tension, et un condensateur de référence ($C_r$) dont la capacité est choisie de telle maniére qu'une tension décalée à la sortie du circuit d'intégration (OPV, $C_f$) est compensée à caractéristique de tension-capacité de l'élément semi-conducteur capacitif ($C_s$) non-influencée par la concentration à mesurer et qui est raccordé, d'une part, à la seconde source de tension (VR) et, d'autre part. au circuit d'intégration (OPV, $C_f$).

10. Circuit suivant l'une des revendications 4 à 9, caractérisé par

un condensateur de référence ($C_r$) capacitif dont la caractéristique de tension-capacité est influencée par une grandeur pertubatrice, sensiblement dans la même mesure que celle de l'élément capacitif ($C_s$), sans que la caractéristique de tension-capacité de l'élément de référence ($C_r$) capacitif ne dépende de la concentration à mesurer, et

la seconde source de tension (VR) destinée à produire un second signal de tension inversé par rapport au premier signal de tension, qui est raccordée à une connexion de l'élément de référence ($C_r$) dont l'autre connexion est reliée au circuit d'intégration (OPV, $C_f$).

FIG.1

FIG.2

FIG.3

GOLD: ⎯⎯⎯
PALLADIUM: ⋯⋯⋯

VORSPANNUNG (V)

3,2   1,6   0,0   -1,6   -3,2

KAPAZITÄT (F) $10^{-9}$

3,6   3,1   2,6   2,1   1,6   1,1   0,6   0,1

FIG.5

$H_2$ - KONZENTRATION (ppm)

300   200   100

ΔVA (mV)

230 220 210 200 190 180 170 160 150 140 130 120 110 100 90 80 70 60 50 40 30 20 10

FIG. 4

FIG.6(a)

FIG.6(b)

FIG.6(c)